# EUROPEAN PATENT APPLICATION

(11) **EP 2 924 087 A1**
(43) Date of publication of application: **30.09.2015**
(21) Application number: 13857417.3
(22) Date of filing: 21.11.2013
(51) Int. Cl.: C09J 7/02, E04B 2/88

(54) **CONNECTION ELEMENT USED TOGETHER WITH SECURITY FILM FOR HIDDEN-FRAME GLASS CURTAIN WALL**

(30) Priority: 23.11.2012 CN 201220629364 U
(71) Applicant: 3M Innovative Properties Company, St. Paul, MN 55133-3427 (US)
(72) Inventor: YANG, Quan, Shanghai 200233 (CN); LV, Hongyang, Shanghai 200233 (CN)
(74) Representative: Vossius & Partner Patentanwälte Rechtsanwälte mbB
(86) International application number: PCT/CN2013/087584
(87) International publication number: WO 2014/079373

(57) **Abstract**

The present utility model provides a connecting member used in combination with a safety film for a hidden frame supported glass curtain wall. The connecting member comprises a connecting bridge plate, an adhesive layer and a release paper, wherein the adhesive layer is disposed on a surface of the connecting bridge plate and comprised of two portions spaced apart from each other; and the release paper covers the surfaces of the two portions of the adhesive layer. By using the connector, the whole exterior glass with the safety film adhered thereto will be prevented from falling down due to spontaneous breakage of the same, while the effect thereof on the appearance of the hidden frame supported curtain wall is minimized.

## Description

### Technical Field of the Utility Model

The present utility model relates to a construction safety technology. In particular, the present utility model relates to a connecting member used in combination with the safety film for a hidden frame supported glass curtain wall.

### Technical Background of the Utility Model

Glass curtain walls are widely used in modern buildings wherein the glass is generally hollow and toughened. Toughened glass has a spontaneous breaking rate of 3% - a long time unsolved problem in the glass industry. Therefore, the many buildings with glass curtain walls in cities are in a sense like time bombs suspended above the heads of those below. Debris from spontaneously breaking glass in such cases will fall down and may result in serious injury.

One solution for solving the problem is by using an exterior laminated piece of hollow glass. This would bring, however, alternative problems such as a cost increase, weight increase, profile size increase, etc.

Due to a requirement to avoid risks resulting from spontaneous breakage of glass panes on a building, a few methods have been devised that can be used to address this issue. One such method is to adhere a safety film to the glass, which is simple to execute, easily maintained, and does not affect the appearance of the building. This method has become widely used.

However, when the safety film is used, it is a frequent concern to the user as to how to protect the whole glass with the safety film adhered thereto from falling down when it is broken. Currently, some connecting members are used to connect the safety film and the window frame, and relatively good results have been achieved. However, such connecting members are all applied to exposed frames, and typically for indoor environments. For a hidden frame supported curtain wall using a hollow glass, a solution has not yet been found on how to protect the whole exterior glass piece with the safety film adhered thereto from falling down when it is broken.

### Summary of the Utility Model

For solving the technical problem of the prior art as described above, the present utility model provides a connecting member used in combination with a safety film, which is adapted to outdoor environments. When the connecting member is used, the whole exterior glass piece with the safety film adhered thereto would not fall down, and meanwhile, the effect of the connecting member on the appearance of the hidden frame supported glass curtain wall will be minimized.

According to the present utility model, a connecting member used in combination with a safety film for a hidden frame supported glass curtain wall is provided. The connecting member comprises a connecting bridge plate, an adhesive layer and a release paper, wherein the adhesive layer is disposed on a surface of the connecting bridge plate and comprised of two portions spaced apart from each other; and the release paper covers the surfaces of the two portions of the adhesive layer.

According to a preferred embodiment of the connecting member of the present utility model, two or more reinforcing ribs are disposed on a surface of the connecting bridge plate which is opposite the surface having the adhesive layer disposed thereon.

According to another preferred embodiment of the connecting member of the present utility model, the connecting bridge plate is in a straight stripe shape.

According to yet another preferred embodiment of the connecting member of the present utility model, the aluminum alloy strip is bent 90 degrees facing the adhesive layer side at a location between the two portions of the adhesive layer.

According to yet another preferred embodiment of the connecting member of the present utility model, the aluminum alloy strip is bent 90 degrees facing a side which is opposite to the adhesive layer side at a location between the two portions of the adhesive layer.

According to the present utility model, when the glass is broken due to spontaneous breakage, the connecting member can bear the weight of the glass and prevent the whole glass piece from falling down, and when subjected to wind pressure of 3.5 kPa, the connecting member would not be blown down. As such, the safety of the exterior glass with a film adhered thereto can be guaranteed, while the effect on the appearance of the hidden frame supported curtain wall is minimized.

### Brief Description of the Drawings

Fig. 1 is a schematic diagram of an embodiment of the connecting member of the present utility model;
Fig. 2 is a schematic diagram of a further embodiment of the connecting member of the present utility model;
Fig. 3 is a schematic diagram of another embodiment of the connecting member of the present utility model;
Fig. 4 is a schematic diagram of yet another embodiment of the connecting member of the present utility model;
Fig. 5 is a schematic diagram depicting the connecting member of the present utility model as mounted onto an exterior wall.

### Detailed Description of the Utility Model

According to the present utility model, a connecting member used in combination with a safety film for a hidden frame supported glass curtain wall is provided. The connecting member comprises a connecting bridge plate, an adhesive layer and a release paper, wherein the adhesive layer is disposed on a surface of the connecting bridge plate and comprised of two portions spaced apart from each other, and the release paper covers the surfaces of the two portions of the adhesive layer.

Referring to Fig. 1, an embodiment of the connecting member of the present utility model is depicted. As shown in Fig. 1, the connecting member according to the present utility model comprises a connecting bridge plate 1, an adhesive layer 2 and a release paper 3, wherein the adhesive layer 2 is disposed on a surface of the connecting bridge plate 1 and comprised of two portions 2-1, 2-2 spaced apart from each other; and the release paper 3 covers the surfaces of the two portions of the adhesive layer 2. The connecting bridge plate 1 is in a straight stripe shape. The surface of the connecting bridge plate 1 can be treated and has a respective color and material in accordance with the requirements of the architect. However, the shape of the connecting bridge plate can also be customized depending on the requirements of the building. The connecting bridge plate may be formed of a material which has a structural strength and is outside atmosphere resistant, such as stainless steel, hard rubber, or aluminum alloy. Aluminum alloy is the most preferred material for the connecting bridge plate, and it is widely used in glass curtain wall construction structures as it is easy to machine, flexible to use, and retains a long service life.

With respect to adhesive layer 2, a VHB adhesive tape from 3M or other like materials may be used by adhering the same to the surface of the aluminum alloy profile. In practice, the other side of the adhesive is adhered to the safety film.

3 is a release paper matched with the adhesive layer 2. In use, the release paper 3 is removed for attaching the adhesive layer to the surface of the safety film.

A further embodiment of the connecting member according to the present utility model will be described by referring to Fig. 2. As shown in Fig. 2, the connecting member according to the present utility model comprises a connecting bridge plate 1, an adhesive layer 2 and a release paper 3, wherein the adhesive layer 2 is disposed on a surface of the connecting bridge plate 1 and comprised of two portions 2-1, 2-2 spaced apart from each other; and the release paper 3 covers the surfaces of the two portions of the adhesive layer 2. The connecting bridge plate 1 is in a straight stripe shape and two reinforcing ribs 4-1 are disposed on the surface of the connecting bridge plate which is opposite to the surface having the adhesive layer disposed thereon. The number of the reinforcing ribs may be 2, or more than 2. The reinforcing ribs are formed of the same material as the connecting bridge plate and integral with the same. The size and location of the reinforcing ribs 4 may be customized depending on the requirements of the construction.

Fig. 3 is a schematic diagram of another embodiment of the connecting member (i.e. the connecting member used at the Yin corners of a glass curtain wall). As shown in Fig. 3, the connecting member according to the present utility model comprises a connecting bridge plate 1, an adhesive layer 2 and a release paper 3, wherein the adhesive layer 2 is disposed on a surface of the connecting bridge plate 1 and comprised of two portions 2-1, 2-2 spaced apart from each other; and the release paper 3 covers the surfaces of the two portions of the adhesive layer 2. The connecting bridge plate 1 is bent 90 degrees facing the adhesive layer side at a location between the two portions of the adhesive layer, and two reinforcing ribs 4-1 are disposed on the surface of the connecting bridge plate which is opposite the surface having the adhesive layer disposed thereon.

Fig. 4 is a schematic diagram of yet another embodiment of the connecting member (i.e. the connecting member used at the Yang corners of a glass curtain wall). As shown in Fig. 4, the connecting member according to the present utility model comprises a connecting bridge plate 1, an adhesive layer 2 and a release paper 3, wherein the adhesive layer 2 is disposed on a surface of the connecting bridge plate 1 and comprised of two portions 2-1, 2-2 spaced apart from each other; and the release paper 3 covers the surfaces of the two portions of the adhesive layer 2. The connecting bridge plate 1 is bent 90 degrees facing a side which is opposite the adhesive layer side at a location between the two portions of the adhesive layer, and two reinforcing ribs 4-1 are disposed on the surface of the connecting bridge plate which is opposite to the surface having the adhesive layer disposed thereon.

The connecting member of the present utility model may be formed according to the description below: firstly, the connecting bridge plate is machined by a general method, and after it is machined, a clean rag is used to clean the dust and oil contaminations on the surface of the connecting bridge plate; a 3M VHB adhesive tape is adhered to one side of the connecting bridge plate with a release paper being kept on the surface of the 3M VHB adhesive tape when the adhesion is completed; a protective adhesive tape is adhered to the other side of the connecting bridge plate. At this time, the formation of the connecting member is completed. Finally, the connecting member is wrapped by a thin cardboard and tied into a bundle using a protective adhesive tape with the weight of each bundle being not greater than 50 Kg. For example, when the connecting bridge plate is formed of aluminum alloy, and the method for forming the same is as follows: selecting an aluminum alloy profile suitable for construction curtain wall with the oxidation film on the surface of the profile being complete and not damaged. If distortions or deformation are present, correct the same first and then the profile can be cut. The length error of the cut material may not be greater than 1 mm, and the angle error at each end should not be greater than 10'. The ends of the cut material may not have apparent machining deformations. The reinforcing ribs of the connecting bridge plate may be machined by a milling machine. Upon completion of the machining and shaping of the connecting bridge plate, the connecting bridge plate may be subjected to surface treatments depending on the requirements of the architect.

Fig. 5 is a schematic diagram depicting the connecting member of the present utility model as mounted onto an exterior wall, wherein 1 is the connecting bridge plate, 2 is the adhesive layer, 5 is the safety film, 6 is the glass curtain wall. In the mounting process, the surface of the glass plate of the curtain wall having the safety film adhered thereto is first cleaned. After the surface is dry, the release paper of the adhesive layer is removed, and then the portions 2-1 and 2-2 are respectively adhered to two adjacent curtain wall glass plates having safety films adhered thereto. When the strength of the adhesive layer is up to its full extent, if broken, the whole piece of the glass can be prevented from falling down and can bear wind pressure of 3.5 kPa. When a piece of glass is broken, the debris would be adhered to the safety film, while the safety film would be connected to the adjacent glasses and films via the connecting member thereby preventing the whole piece of the broken glass with the safety film from falling down.

The forces exerted on the connecting member will be proof calculated as follows.

### Static load proof calculations

In accordance with the formula, the weight per meter of the long aluminum stripe is equal to 0.003 m (thickness) × 1 m (length) × 0.06 m (width) × 2.9 g/cm³ (the density of aluminum), and the result is 0.522 Kg, and thus the bond area required for bearing the weight per meter of the long aluminum stripe is 0.522 Kg × 55 cm²/Kg, which is equal to 28.71 cm² ; the actual bond area is 2 cm (the width of the VHB adhesive tape from 3M) × 1 m (the length of the VHB adhesive tape from 3M) × 2 (two adhesive tapes on each aluminum stripe) = 400 cm².

Therefore, the actual bond area is far greater than the bond area required for bearing the static load, which indicates that the structure of the connecting member satisfies the safety requirements with respect to the static load

### Wind load proof calculations

Wind load is a dynamic load. The dynamic load-bearing capability of 3M VHB adhesive tape is 83 kPa.

When the glass plate has a length a and a width b, the maximal value of the wind load exerted on each glass plate will be 83 × a × b.

When the glass plate is broken, the debris will be adhered as a whole by the safety film, and the wind load will be exerted on the connecting members surrounding the glass piece. The exterior force exerted on the unit length connecting member can be simplified as 83 × a × b / (2a + 2b).

For example, when the wind load is 3,500 Pa and the size of the glass is 3 m × 1.2 m, then the wind pressure exerted on each glass piece will be 3,500 Pa × 3 m × 1.2 m = 12,600 N. After the glass is broken, this load will be exerted on the four sides of the glass. Accordingly, the load exerted on each meter will be 12,600 / (3 m + 3 m + 1.2 m + 1.2 m) = 1,500 N.

The bonding force per meter provided by the adhesive tape is: 83 kPa × 1 m (length) × 2 cm (the width of 3M VHB) = 1,660 N.

Therefore, the bonding force provided by the adhesive tape is greater than the load generated by the wind pressure. Accordingly, the structure of the connecting member satisfies the wind pressure safety requirements.

Although some embodiments of the present utility model have been disclosed and described, it would be understood by a person skilled in the art that the present utility model would not be limited to these embodiments, and modifications may be made without departing from the principle and spirit of the present utility model. The scope of the present utility model shall be defined by the claims and the equivalents thereof.

## Claims

1. A connecting member used in combination with a safety film for a hidden frame supported glass curtain wall, the connecting member comprises a connecting bridge plate, an adhesive layer and a release paper, wherein the adhesive layer is disposed on a surface of the connecting bridge plate and comprised of two portions spaced apart from each other; and the release paper covers the surfaces of the two portions of the adhesive layer.

2. The connecting member according to claim 1, wherein the connecting bridge plate comprises two or more reinforcing ribs disposed on a surface of the connecting bridge plate which is opposite the surface having the adhesive layer disposed thereon.

3. The connecting member according to claim 1 or 2, wherein the connecting bridge plate is in a straight stripe shape.

4. The connecting member according to claim 1 or 2, wherein the connecting bridge plate is bent 90 degrees facing the adhesive layer side at a location between the two portions of the adhesive layer.

5. The connecting member according to claim 1 or 2, wherein the connecting bridge plate is bent 90 degrees facing a side which is opposite to the adhesive layer side at a location between the two portions of the adhesive layer.
